# EUROPÄISCHE PATENTSCHRIFT

(11) **EP 1 966 020 B1**
(45) Veröffentlichungstag und Bekanntmachung des Hinweises auf die Patenterteilung: **01.02.2012**
(21) Anmeldenummer: 06830239.7
(22) Anmeldetag: 30.11.2006
(51) Int. Cl.: B60W 20/00

(54) **VERFAHREN ZUM BETREIBEN EINES HYBRIDFAHRZEUGS**
METHOD FOR OPERATING A HYBRID VEHICLE
PROCÉDÉ PERMETTANT DE FAIRE FONCTIONNER UN VÉHICULE HYBRIDE

(30) Priorität: 22.12.2005 DE 102005061397
(43) Veröffentlichungstag der Anmeldung: 10.09.2008
(73) Patentinhaber: ROBERT BOSCH GMBH, 70442 Stuttgart (DE)
(72) Erfinder: FALKENSTEIN, Jens-Werner, 73434 Aalen (DE)
(86) Internationale Anmeldenummer: PCT/EP2006/069137
(87) Internationale Veröffentlichungsnummer: WO 2007/074020

(56) Entgegenhaltungen:
- EP-A2- 1 323 564
- EP-A2- 1 447 255
- DE-A1-102004 013 581
- US-A1- 2005 027 413

## Beschreibung

### Stand der Technik

Die Erfindung geht aus von einem Verfahren zum Betreiben eines Hybridfahrzeugs nach dem Oberbegriff des Anspruchs 1.

Die Reduzierung von Emissionen und Kraftstoffverbrauch führte in letzter Zeit zur Weiterentwicklung von Hybridantrieben für Kraftfahrzeuge. Ziel ist, den Verbrennungsmotor im Bereich günstiger Wirkungsgrade zu betreiben, im Stillstand des Fahrzeugs bzw. bei geringen Fahrzeuggeschwindigkeiten abzuschalten und elektrisch zu fahren sowie Bremsenergie durch Rekuperation zu nutzen. Dies erfolgt durch Vorgabe optimaler Werte für die im Antriebsstrang vorhandenen Freiheitsgrade. Beim Parallelhybriden sind Freiheitsgrade z.B. die Aufteilung des vom Fahrer angeforderten Soll-Antriebsmoments auf den Verbrennungsmotor und eine oder mehrere Elektromaschinen sowie die Wahl des Gangs bei automatisierten Stufengetrieben. Insgesamt entsteht ein Optimierungsproblem, wobei auf geringen Kraftstoffverbrauch, geringe Abgasemissionen, hohen Fahrspaß usw. gezielt wird.

Aus der EP 1 136 311 A2 ist ein Hybridfahrzeug bekannt, bei dem ein Soll-Ladezustand einer Batterie abhängig davon eingestellt wird, ob ein Aufladen der Batterie oder ein Entladen der Batterie im Fahrbetrieb zu erwarten ist. Ist abzusehen, dass das Hybridfahrzeug in näherer Zukunft anhält und wieder gestartet oder stark beschleunigt wird, so dass eine deutliche Entladung der Batterie zu erwarten ist, wird der Soll-Ladezustand der Batterie erhöht. Ist abzusehen, dass ein Bremsvorgang des Hybridfahrzeugs ansteht, wird der Soll-Ladezustand der Batterie erniedrigt, um die beim Bremsvorgang durch generatorischen Betrieb der Elektromaschine entstehende elektrische Leistung in der Batterie speichern zu können.

Aus der DE 102004013581 A ist ebenfalls ein Verfahren zum Betreiben eines Hybridantriebs, bei dem wenigstens zwei Aggregate (2, 3) antriebsmäßig zusammenwirken bekannt. Dabei wird ein abgegebenes Drehmoment überwacht und auf bestimmte Grenzen eingeschränkt.

Aus der US 2005/0027413 A ist ebenfalls ein Verfahren zum Betreiben eines Hybridantriebs. bei dem wenigstens zwei Aggregate (3, 4) antriebsmäßig zusammenwirken, bekannt. Dabei berechnet eine Steuerung aufgrund der vorgegebenen Betriebspunkte, welcher Antriebsmodus (nur mit Verbrennungsmotor, nur elektrisch) der verbrauchsärmste ist.

Aus der EP 1323564 A2 ist ebenfalls ein Verfahren zum Betreiben eines Hybridantriebs, bei dem wenigstens zwei Aggregate (2, 1, 4) antriebsmäßig zusammenwirken. Dabei wird die Ist-Leistung in Abhängigkeit einer unerwünschten Umsetzung des Soll-Drehmoment des Verbrennungsmotors geregelt.

Erfindungsgemäß is ein Verfahren gemäß Anspruch 1 vorgesehen Vorteilhafte lusgestaltungen sind gegenstand der Unteransprüche.

### Vorteile der Erfindung

Vorteilhaft kann beim Parallelhybriden eine optimale Aufteilung des Antriebsmomentes auf die Aggregate, insbesondere einen Verbrennungsmotor und eine Elektromaschine, gefunden werden. Daneben kann der Leistungsbedarf eines elektrischen Bordnetzes erfüllt und dafür gesorgt werden, dass der Ladezustand eines elektrischen Energiespeichers in einem erlaubten Bereich bleibt. Z.B. kann aus dem momentanen Leistungsbedarf des Bordnetzes und dem momentanen Ladezustand eine elektrische Soll-Leistung für die Elektro - maschine ermittelt werden. Die elektrische Soll-Leistung bei der Auswahl des Betriebspunktes der Elektromaschine vorzugeben, macht wenig Sinn, da sich unter Berücksichtigung der momentanen Drehzahl der Elektromaschine daraus direkt das Drehmoment der Elektromaschine ergibt. Der beim hybridischen Betrieb (Verbrennungsmotor und Elektromaschine sind in Betrieb) vorhandene Freiheitsgrad, die Aufteilung des Soll-Antriebsmomentes auf die beiden Aggregate Verbrennungsmotor und Elektromaschine, wäre damit bereits festgelegt. Vielmehr ist eine Abweichung von der elektrischen Soll-Leistung sinnvoll, z.B. indem dann verstärkt geladen wird, wenn ein günstiger "Energiepreis" vorliegt. Dieser Energiepreis kann z.B. aus der zur Erzeugung von elektrischer Energie erforderlichen Kraftstoffmenge und der erzeugten elektrischen Energiemenge gebildet werden. Der Energiepreis hängt vom momentanen Betriebspunkt des Antriebsstranges bzw. vom momentanen Fahrzustand ab. Bei ungünstigem Energiepreis kann der Energiespeicher dann weniger geladen bzw. auch entladen werden. Die elektrische Soll-Leistung muss im zeitlichen Mittel, aber nicht zu jedem Zeitpunkt erfüllt werden. Ein entsprechendes Verfahren kann auch bei anderen Hybridkonzepten, wie z.B. den leistungsverzweigenden Hybridfahrzeugen, eingesetzt werden. Der Energiespeicher ist vorzugsweise ein elektrischer Energiespeicher. Denkbar ist jedoch auch eine andere Art von Energiespeicher, z.B. ein Schwungrad.

Ist der Fahrzyklus im Voraus bekannt, so kann eine Trajektorien-Optimierung eingesetzt werden, um optimale Aggregatebetriebspunkte zu ermitteln. Im Normalfall ist während eines Fahrzyklus nur der vergangene Teil bekannt, nicht aber der in der Zukunft liegende.

Es wird eine optimale Wahl der Aggregatebetriebspunkte von Verbrennungsmotor und einer (oder mehreren) Elektromaschine(n) bei Hybridfahrzeugen getroffen werden, wobei das vom Fahrer und von Nebenaggregaten, wie z.B. Klimakompressor, angeforderte Soll-Antriebsmoment erzeugt wird und eine elektrische Soll-Leistung im zeitlichen Mittel eingehalten wird, aber momentane Abweichungen von der elektrischen Soll-Leistung, je nach momentanem Energiepreis, erfolgen.

Dies wird dadurch erreicht, indem eine Optimierung der Aggregatebetriebspunkte auf Basis der momentanen Randbedingungen, wie z.B. Fahrzeuggeschwindigkeit, und vom Fahrer bzw. Nebenaggregaten angefordertes Soll-Antriebsmoment erfolgt, wobei zusätzlich die aufsummierte bzw. aufintegrierte Abweichung der elektrischen Ist-Leistung von der elektrische Soll-Leistung über einen vergangenen Zeitraum bei der Optimierung berücksichtigt wird. Wurde z.B. im betrachteten Zeitraum zu wenig elektrische Energie erzeugt, so wird ein Gütekriterium für eine so genannte Online-Optimierung (Optimierung zur Laufzeit der Algorithmen der Fahrzeugsteuerung) so modifiziert, dass sich tendenziell eine höhere elektrische Leistung ergibt.

Eine andere günstige Möglichkeit besteht in einer sogenannten Offline-Optimierung, d.h. für unterschiedliche Sätze von Randbedingungen (z.B. Fahrzeuggeschwindigkeit und Soll-Antriebsmoment) wird das Optimierungsverfahren gelöst und die Ergebnisse werden in Form von Kennfeldern in der Fahrzeugsteuerung hinterlegt. Hier besteht die Möglichkeit, die mittels Kenfeldern hinterlegten Ergebnisse auf Basis der aufintegrierten Abweichung zu modifizieren, um die elektrischen Ist-Leistung anzupassen.

Eine weitere Möglichkeit besteht darin, mehrere Sätze von Kennfeldern zu hinterlegen, die sich durch die Bewertung der elektrischen Leistung im Gütekriterium der Offline-Optimierung unterscheiden und somit im Mittel zu unterschiedlicher Ist-Leistung führen. Die Auswahl, welcher Satz von Kennfeldern genutzt wird, geschieht dann auf Basis der aufintegrierten Abweichung. Eine Interpolation zwischen den Ausgängen der einzelnen Kennfeldsätze basierend auf der Abweichung ist ebenso möglich.

Vorteilhaft ist, wenn zusätzlich der Einfluss der aufsummierten oder aufintegrierten Abweichung auf die elektrische Ist-Leistung der Elektromaschine(n) unterschiedlich groß gewählt werden kann, z.B. durch Vorgabe eines Verstärkungsfaktors. Bei sehr hohem oder sehr geringem Ladezustand des elektrischen Energiespeichers oder in kritischen Betriebszuständen des Energiespeichers, wie z.B. bei hoher Temperatur, kann dafür gesorgt werden, dass die elektrische Ist-Leistung nahe bei der Soll-Leistung liegt. Mit entsprechender Vorgabe der Soll-Leistung wird der Energiespeicher geschont bzw. in einen Bereich mittleren Ladezustandes gebracht. Verbessert sich der Ladezustand bzw. der Betriebszustand des elektrischen Energiespeichers, so kann der Einfluss der aufintegrierten Abweichung auf die elektrische Ist-Leistung wieder zurückgenommen werden, wodurch je nach momentanem Energiepreis die elektrische Ist-Leistung wieder stärker von der Soll-Leistung abweicht, im zeitlichen Mittel die Soll-Leistung aber eingehalten wird.

Die Erfindung kann bei allen hybridischen Kraftfahrzeugantrieben eingesetzt werden, bei denen Freiheitsgrade vorliegen, z.B. die Aufteilung des vom Fahrer bzw. Nebenaggregaten angeforderten Drehmomentes auf den Verbrennungsmotor und eine oder mehrere Elektromaschinen.

### Zeichnungen

Weitere Ausführungsformen, Aspekte und Vorteile der Erfindung ergeben sich ohne Beschränkung der Allgemeinheit aus einem nachfolgend anhand von Zeichnungen dargestellten Ausführungsbeispiel der Erfindung.

Im Folgenden zeigen:
- Fig. 1: eine bevorzugte Regelstrategie eines Hybridantriebs;
- Fig. 2: einen Verlauf eines maximalen Drehmoments in Abhängigkeit von einer Winkelgeschwindigkeit einer Elektromaschine bzw. eines Verbrennungsmotors; und
- Fig. 3: ein zeitabhängiges Verhalten eines Drehmoments und einer elektrischen Leistung bei einem Sprung zwischen zwei Betriebspunkten.

### Beschreibung des Ausführungsbeispiels

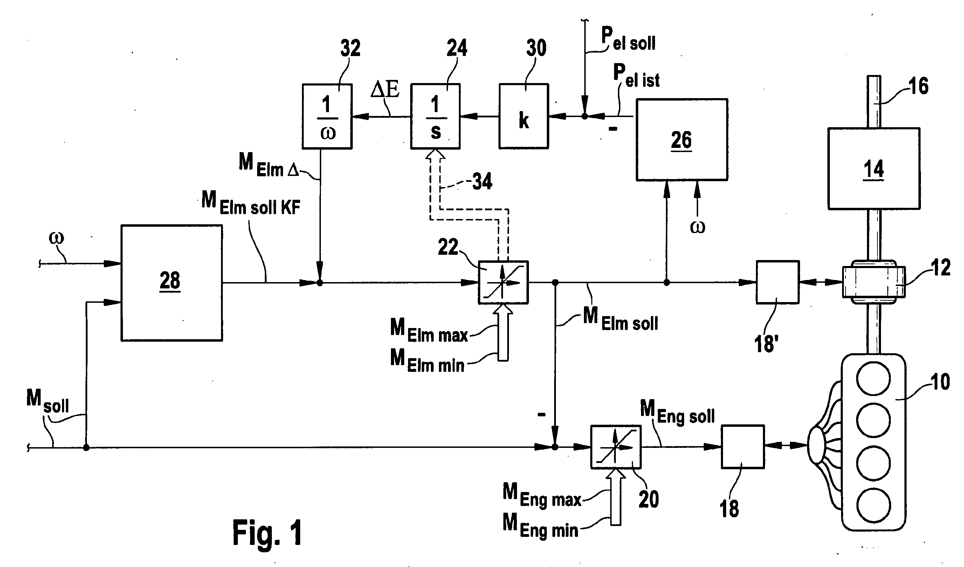

In Fig. 1 bis Fig. 3 ist ein Ausführungsbeispiel für die Erfindung dargestellt. Ein Verbrennungsmotor 10 ist beispielhaft mit einer Saugrohreinspritzung und einem elektronischem Gaspedal (E-Gas, elektronische Drosselklappe) versehen. Ein Schwungrad des Verbrennungsmotors 10 ist mit einer Elektromaschine 12 ohne zwischengeschaltete Trennkupplung gekoppelt (Kurbelwellenstartergenerator), so dass rein elektrisches Fahren nicht möglich ist. Die Drehmomente von Verbrennungsmotor 10 und Elektromaschine 12 addieren sich zum Antriebsdrehmoment, das über ein Handschaltgetriebe 14 mit gestufter Übersetzung und eine Welle 16 an nicht dargestellte Antriebsräder weitergeleitet wird, wie aus Fig. 1 ersichtlich ist. Es ist ein Steuergerät 18 für den Verbrennungsmotor 10 und ein Steuergerät 18' für die Elektromaschine 12 vorgesehen.

Ein vom Fahrer eingelegter Gang kann von einer Steuerung nicht beeinflusst werden. Vom Fahrer wird das Soll-Antriebsmoment Msoll am Getriebeeingang, d.h. das Summendrehmoment von Verbrennungsmotor 10 und Elektromaschine 12, vorgegeben. Die gemeinsame Winkelgeschwindigkeit w von Verbrennungsmotor 10 und Elektromaschine 12 ergibt sich aus der Fahrzeuggeschwindigkeit und dem eingelegten Gang. In einer Offline-Optimierung wurde ein Kennfeld (Block 28) berechnet, das basierend auf der Winkelgeschwindigkeit w und dem Soll-Antriebsmoment Msoll ein erstes Solldrehmoment MEImsoIIKF für die Elektromaschine 12 ermittelt. Die Differenz aus MsoII und einem zweiten, korrigierten Solldrehmoment MEImsoII für die Elektromaschine 12 entspricht dem Solldrehmoment MEngsoll für den Verbrennungsmotor 10. In die Offline-Optimierung gehen die Wirkungsgradkennfelder von Verbrennungsmotor 10 und Elektromaschine 12 sowie eines nicht dargestellten Energiespeichers ein. Das Solldrehmoment MEImsoIIKF bzw. das Kennfeld ist so gewählt, dass in Betriebspunkten mit günstigem Energiepreis von der Elektromaschine 12 vermehrt elektrische Energie erzeugt wird, bei hohem Energiepreis entsprechend weniger. Daneben wird die Elektromaschine 12 dazu benutzt, durch Betriebspunktverschiebung des Verbrennungsmotors 10 Abgasemissionen zu reduzieren.

Je nach Betriebspunkt bzw. Randbedingungen (Msoll, w) erzeugt die Elektromaschine 12 eine höhere bzw. geringere elektrische Ist-Leistung Pelist, bzw. geht vom generatorischen in den motorischen Betrieb über. Das Kennfeld ist so gewählt, dass im Mittel (über alle Betriebspunkte Msoll, w) die elektrische Ist-Leistung Pelist in etwa den durchschnittlichen Leistungsbedarf des nicht dargestellten elektrischen Bordnetzes erfüllt. Dazu wird eine Häufigkeitsverteilung über die Betriebspunkte (Msoll, w) angenommen, wie sie in einem typischen Fahrzyklus auftritt. Da einzelne Fahrzyklen und auch der Leistungsbedarf des Bordnetzes variieren, ist eine Korrektur des Kennfeldausganges erforderlich. Dies erfolgt anhand einer aufintegrierten Abweichung ΔE der elektrischen Ist-Leistung Pelist von der elektrische Soll-Leistung Pelsoll. Die elektrische Soll-Leistung Pelsoll wird anhand des Leistungsbedarfes des elektrischen Bordnetzes und anhand des Ladezustandes (SOC) des nicht dargestellten elektrischen Energiespeichers ermittelt. Daneben können weitere Größen wie z.B. Temperatur usw. einfließen.

Im Ausführungsbeispiel wird die elektrische Ist-Leistung Pelist mit Hilfe eines einfachen Modells 26 der Elektromaschine 12 - im Wesentlichen bestehend aus dem Wirkungsgradkennfeld- berechnet. Es wird vorausgesetzt, dass die Elektromaschine 12 ein Solldrehmoment MElmsoll ausreichend genau umsetzt. Alternativ dazu kann die elektrische Ist-Leistung Pelist auch aus gemessenen Größen ermittelt werden.

Die Abweichung ΔE ergibt sich als Ausgang eines Integrators 24, der die Differenz zwischen der elektrischen Soll-Leistung Pelsoll und der elektrischen Ist-Leistung Pelist aufintegriert. Es wird ein zusätzliches Korrektur-Drehmoment MEImΔ berechnet, das dem Quotienten aus der Abweichung ΔE und der momentanen Winkelgeschwindigkeit ω entspricht (Block 32). Optional kann hier noch der Wirkungsgrad der Elektromaschine 12 berücksichtigt werden. Mit einem Verstärkungsfaktor k (Block 30) wird die Wirkung der Rückführung beeinflusst. Mit Erhöhen des Verstärkungsfaktors k wird die Abweichung der elektrischen Ist-Leistung Pelist von der elektrischen Soll-Leistung Pelsoll kleiner. Insbesondere bei sehr hohem bzw. sehr geringem Ladezustand (SOC) des elektrischen Energiespeichers 12 oder bei kritischen Betriebsparametern des elektrischen Energiespeichers (z.B. Übertemperatur) empfiehlt sich, durch Erhöhen des Verstärkungsfaktors k die elektrische Soll-Leistung Pelsoll ausreichend genau einzuhalten.

Das beschriebene Verfahren sorgt dafür, dass bei dynamischer Fahrweise mit stark wechselnden Betriebspunkten die elektrische Ist-Leistung Pelist je nach Energiepreis optimal gewählt wird, beeinflusst vom Kennfeldausgang. Bei dynamisch wechselnden Betriebspunkten ergeben sich infolge des Integratorverhaltens nur geringe Änderungen in der Rückführung bzw. der Abweichung ΔE. Die Abweichung ΔE stellt sich so ein, dass die elektrische Soll-Leistung Pelsoll nicht zu jedem Zeitpunkt, aber im zeitlichen Mittel erfüllt wird.

Bei längerer Fahrt mit näherungsweise konstantem Betriebspunkt (Msoll, w), z.B. einer Autobahnfahrt, nähert sich die elektrische Ist-Leistung Pelist der Soll-Leistung Pelsoll aufgrund des Korrektur-Drehmomentes MelmΔ, basierend auf der Abweichung ΔE, asymptotisch an.

Das Solldrehmoment MElmsoll der Elektromaschine ist mit Hilfe eines Begrenzers 22 limitiert. Die Grenzen MElmmax, MElmmin berechnen sich aus den momentanen Betriebsgrenzen der Elektromaschine 12 und des elektrischen Energiespeichers sowie aus dem momentanen Leistungsbedarf des Bordnetzes. Die Grenzen MElmmax, MElmmin können von weiteren Randbedingugnen abhängen, z.B. von der Winkelgeschwindigkeit w und dem Soll-Antriebsmoment Msoll. Ist eine Begrenzung aktiv, so wird die Integration der Abweichung ΔE eingefroren bzw. beeinflusst, z.B. durch einseitige Limitierung ("Anti-Windup", Linie 34).

Ebenso ist von Vorteil, die Abweichung ΔE abhängig vom Betriebszustand des Antriebsstranges zu limitieren bzw. beim Wechsel des Betriebszustandes, z.B. beim Übergang von der Bremsenergierekuperation in das hybridische Antreiben oder beim Übergang in den Boostbetrieb, neu zu initialisieren.

Das Solldrehmoment MEngsoll für den Verbrennungsmotor 10 ist mit Hilfe eines Begrenzens 20 auf die Betriebsgrenzen MEngmax, MEngmin des Verbrennungsmotors 10 limitiert. Das dargestellte Verfahren kann damit auch für eine Abregelung beim Boostbetrieb benutzt werden. Über den Verstärkungsfaktor k kann das Verhalten der Abregelung eingestellt werden, z.B. indem der Verstärkungsfaktors k vom momentanen Ladezustand (SOC) des elektrischen Energiespeichers beeinflusst wird.

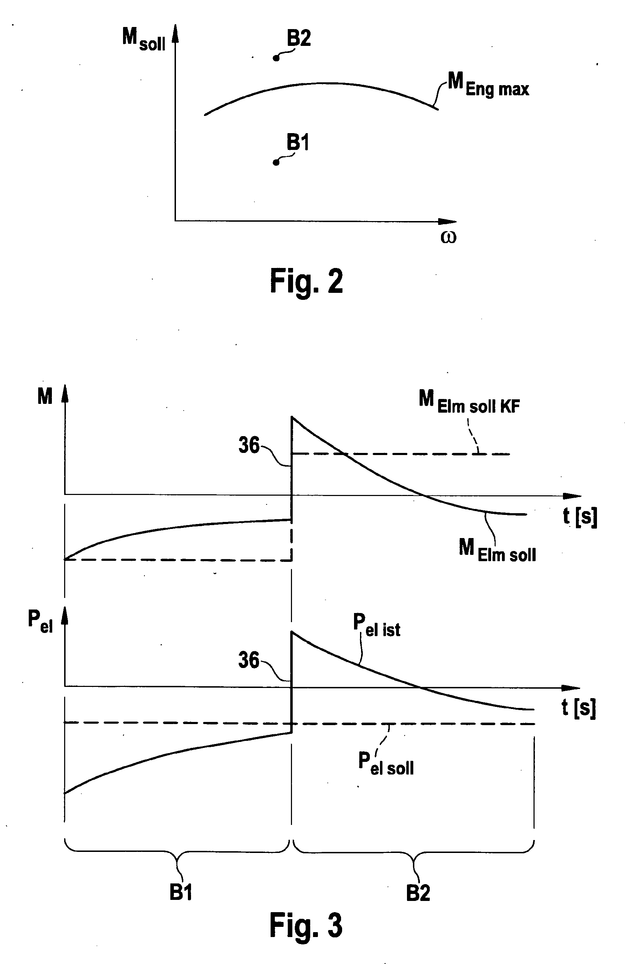

Die Fig. 2 und 3 erläutern einen idealisierten Sprung in einem Betriebspunkt 36, bei dem sich Msoll schlagartig ändert. Der Einfachheit halber wird von einer konstanten Winkelgeschwindigkeit ω ausgegangen, so dass der Sprung sich nicht auf ω auswirkt. Ein entsprechender Betriebspunktwechsel entsteht näherungsweise, wenn der Fahrer plötzlich ein höheres Drehmoment Msoll anfordert, z.B. um beim Übergang von ebener Fahrbahn (Betriebspunkt B1) in eine Steigung (Betriebspunkt B2) ohne Gangwechsel die Fahrzeuggeschwindigkeit konstant zu halten. Im Betriebspunkt B1 wird ein Sollmoment Msoll gefordert, das unterhalb des Maximalmomentes MEngmax des Verbrennungsmotors 10 liegt (Fig. 2). Dabei liefert das Kennfeld (Block 28) ein negatives MEImsoIIKF, verbunden mit verstärkter Erzeugung von elektrischer Energie (negatives Pelist), wodurch eine energetisch sinnvolle Lastanhebung des Verbrennungsmotors 10 erreicht wird (Fig. 2). Der Betriebspunkt B1 wird längere Zeit eingehalten, durch Einfluss des Korrektur-Drehmomentes MElmΔ nähert sich die elektrische Ist-Leistung Pelist der Soll-Leistung Pelsoll asymptotisch an (Fig. 3).

Im Betriebspunkt B2 wird ein Sollmoment Msoll gefordert, das oberhalb des Maximalmomentes MEngmax des Verbrennungsmotors 10 liegt (Fig. 2), dieses Sollmoment Msoll kann temporär eingestellt werden, indem die Elektromaschine 12 in den motorischen Betrieb wechselt und dem elektrischen Energiespeicher Leistung entnimmt (Boostbetrieb, MEImsolIKF und Pelist sind positiv). Der Betriebspunkt B2 wird längere Zeit vom Fahrer angefordert, das Korrektur-Drehmoment MElmΔ führt zu einer Reduzierung des Solldrehmomentes MEImsoII und einer Annäherung der elektrischen Ist-Leistung Pelist an die Soll-Leistung Pelsoll, verbunden mit einer Reduzierung des erzeugten Summendrehmomentes von Verbrennungsmotor 10 und Elektromaschine 12. Dies führt zu einer Abregelung des Boostbetriebs.

Die aufintegrierte Abweichung ΔE kann als Maß für die dem Energiespeicher während des Boostbetriebs entnommene Energiemenge angesehen werden. Nimmt der Fahrer das Solldrehmoment Msoll zurück, wird infolge der "Speicherwirkung" von ΔE bzw. MElmΔ zunächst eine erhöhte Ladeleistung angefordert, um den während des Boostbetriebs erfolgten Energieverlust des elektrischen Energiespeichers zumindest teilweise auszugleichen.

## Patentansprüche

1. Verfahren zum Betreiben eines Hybridantriebs, bei dem wenigstens zwei Aggregate (10, 12) antriebsmässig zusammenwirken und wenigstens zeitweise ein Energiespeicher von einem der Aggregate (12) geladen und wenigstens zeitweise eines der Aggregate (12) vom Energiespeicher mit Antriebsenergie versorgt wird, wobei das Aggregat (12) eine Soll-Leistung (Pelsoll) erzeugt,
die aus dem momentanen Leistungsbedarf eines Bordnetzes und dem momentanen Ladezustand des elektrischen Energiespeichers ermittelt wird,
wobei ein angefordertes Soll-Antriebsmoment (Msoll) des Antriebs erzeugt und gleichzeitig die Soll-Leistung (Pelsoll) des Aggregats (12) im zeitlichen Mittel eingehalten wird, wobei Abweichungen von der Soll-Leistung (Pelsoll) in Abhängigkeit von aktuellen Betriebspunkten der Aggregate (10, 12) zugelassen werden und
abhängig von aktuellen Randbedingungen und abhängig vom Soll-Antriebsmoment (Msoll) eine Optimierung der Betriebspunkte der Aggregate (10, 12) erfolgt,
**dadurch gekennzeichnet, dass** eine über einen vergangenen Zeitraum aufsummierte oder aufintegrierte Abweichung ([Delta]E) der Ist-Leistung (Pelist) von der Soll-Leistung (Pelsoll) des Aggregats (12) bei der Optimierung berücksichtigt wird.

2. Verfahren nach Anspruch 1, **dadurch gekennzeichnet, dass** ein vom momentanen Betriebspunkt des Antriebsstrangs oder vom momentanen Fahrzustand abhängiger Energiepreis verwendet wird.

3. Verfahren nach Anspruch 2, **dadurch gekennzeichnet, dass** der Energiepreis aus der zur Erzeugung von elektrischer Energie erforderlichen Kraftstoffmenge und der erzeugten elektrischen Energiemenge gebildet wird.

4. Verfahren nach Anspruch 2 oder 3, **dadurch gekennzeichnet, dass** die Optimierung der Betriebspunkte der Aggregate (10, 12) derart erfolgt, dass in Betriebspunkten mit günstigem Energiepreis von der Elektromaschine (12) vermehrt elektrische Energie erzeugt wird, bei hohem Energiepreis entsprechend weniger.

5. Verfahren nach einem der vorhergehenden Ansprüche, **dadurch gekennzeichnet, dass** der Energiespeicher dann verstärkt geladen wird, wenn eine Aufladung ein Optimum der Betriebspunkte der Aggregate (10, 12) ergibt.

6. Verfahren nach einem der Ansprüche 1 bis 5 **dadurch gekennzeichnet, dass** die Optimierung während einer Laufzeit von Algorithmen einer Fahrzeugsteuerung erfolgt.

7. Verfahren nach einem der Ansprüche 1 bis 4, **dadurch gekennzeichnet, dass** zur Optimierung Ergebnisse für unterschiedliche Sätze von Randbedingungen in Kennfelder in einer Fahrzeugsteuerung abgelegt werden.

8. Verfahren nach Anspruch 7 **dadurch gekennzeichnet, dass** die mittels der Kennfelder hinterlegten Ergebnisse auf der Basis der über einen vergangenen Zeitraum aufsummierte oder aufintegrierte Abweichung (ΔE) der Ist-Leistung (Pelist) von der Soll-Leistung (Pelsoll) des Aggregats (12) modifiziert werden.

9. Verfahren nach einem der Ansprüche 1 bis 5, **dadurch gekennzeichnet, dass** mehrere Sätze von Kennfeldern hinterlegt werden, die im Mittel zu unterschiedlichen Ist-Leistungen (Pelist) des Aggregats (12) führen.

10. Verfahren nach Anspruch 9, **dadurch gekennzeichnet, dass** eine Auswahl des Satzes von Kennfeldern auf der Basis von der über einen vergangenen Zeitraum aufsummierten oder aufintegrierten Abweichung (ΔE) der Ist-Leistung (Pelist) von der Soll-Leistung (Pelsoll) des Aggregats (12) erfolgt.

11. Verfahren nach Anspruch 9 oder 10 **dadurch gekennzeichnet, dass** eine Interpolation zwischen Ausgängen der einzelnen Sätze von Kennfeldern erfolgt.

12. Verfahren nach einem der Ansprüche 1 bis 11, **dadurch gekennzeichnet, dass** die über einen vergangenen Zeitraum aufsummierte oder aufintegrierte Abweichung (ΔE) der Ist-Leistung (Pelist) von der Soll-Leistung (Pelsoll) des Aggregats (12) durch Vorgabe eines Verstärkungsfaktors (k) gewichtet wird.

13. Verfahren nach einem der Ansprüche 1 bis 12 **dadurch gekennzeichnet, dass** die über einen vergangenen Zeitraum aufsummierte oder aufintegrierte Abweichung (ΔE) der Ist-Leistung (Pelist) von der Soll-Leistung (Pelsoll) des Aggregats (12) abhängig vom Betriebszustand des Antriebsstrangs limitiert wird.

14. Verfahren nach einem der Ansprüche 1 bis 13, **dadurch gekennzeichnet, dass** die über einen vergangenen Zeitraum aufsummierte oder aufintegrierte Abweichung (ΔE) der Ist-Leistung (Pelist) von der Soll-Leistung (Pelsoll) des Aggregats (12) beim Wechsel von einem Betriebszustand des Antriebsstrangs in einen anderen neu initialisiert wird.

## Claims

1. Method for operating a hybrid drive, in which at least two assemblies (10, 12) interact in terms of drive and at least temporarily charge an energy store of one of the assemblies (12), and one of the assemblies (12) is at least temporarily supplied with driving energy by the energy store, wherein the assembly (12) generates a setpoint power (Pelsoll), which is determined from the instantaneous power demand of an on-board power system and the instantaneous charge state of the electrical energy store,
wherein a required setpoint drive torque (Msoll) of the drive is generated and at the same time the setpoint power (Pelsoll) of the assembly (12) is maintained averaged over time, wherein deviations from the setpoint power (Pelsoll) are permitted as a function of current operating points of the assemblies (10, 12), and
the operating points of the assemblies (10, 12) are optimized as a function of current peripheral conditions and as a function of the setpoint drive torque (Msoll),
**characterized in that** a deviation ([Delta]E) which is of the actual power (Pelist) from the setpoint power (Pelsoll) of the assembly (12), which is summed or integrated over a preceding time period, is taken into account in the optimization.

2. Method according to Claim 1, **characterized in that** an energy cost which is dependent on the instantaneous operating point of the drive train or on the instantaneous driving state is used.

3. Method according to Claim 2, **characterized in that** the energy cost is formed from the quantity of fuel necessary to generate electrical energy and the quantity of electrical energy which is generated.

4. Method according to Claim 2 or 3, **characterized in that** the operating points of the assemblies (10, 12) are optimized in such a way that at operating points with a favourable energy cost more electrical energy is generated by the electric machine (12) and correspondingly less electrical energy when there is a high energy cost.

5. Method according to one of the preceding claims, **characterized in that** the energy store is charged to a greater degree if charging results in an optimum of the operating points of the assemblies (10, 12).

6. Method according to one of Claims 1 to 5, **characterized in that** the optimization takes place during a processing time of algorithms of a vehicle controller.

7. Method according to one of Claims 1 to 5, **characterized in that** results for different sets of peripheral conditions are stored in characteristic diagrams in a vehicle controller for the purpose of optimization.

8. Method according to Claim 7, **characterized in that** the results which are stored by means of the characteristic diagrams are modified on the basis of the deviation (ΔE) of the actual power (Pelist) from the setpoint power (Pelsoll) of the assembly (12), which is summed or integrated over a preceding time period.

9. Method according to one of Claims 1 to 5, **characterized in that** a plurality of sets of characteristic diagrams which lead on average to different actual powers (Pelist) of the assembly (12), are stored.

10. Method according to Claim 9, **characterized in that** the set of characteristic diagrams is selected on the basis of the deviation (ΔE) of the actual power (Pelist) from the setpoint power (Pelsoll) of the assembly (12), which is summed or integrated over a preceding time period.

11. Method according to Claim 9 or 10, **characterized in that** interpolation is carried out between outputs of the individual sets of characteristic diagrams.

12. Method according to one of Claims 1 to 11, **characterized in that** the deviation (ΔE) of the actual power (Pelist) from the setpoint power (Pelsoll) of the assembly (12), which is summed or integrated over a preceding time period, is weighted by predefining an amplification factor (k).

13. Method according to one of Claims 1 to 12, **characterized in that** the deviation (ΔE) of the actual power (Pelist) from the setpoint power (Pelsoll) of the assembly (12), which is summed or integrated over a preceding time period, is limited as a function of the operating state of the drive train.

14. Method according to one of Claims 1 to 13, **characterized in that** the deviation (ΔE) of the actual power (Pelist) from the setpoint power (Pelsoll) of the assembly (12), which is summed or integrated over a preceding time period, is newly initialized at the changeover from one operating state of the drive train into another.

## Revendications

1. Procédé permettant de faire fonctionner un entraînement hybride, dans lequel au moins deux agrégats (10, 12) interagissent sur le plan de l'entraînement et dans lequel un accumulateur d'énergie est chargé par un des agrégats (12) au moins par intermittence et un des agrégats (12) est alimenté en énergie d'entraînement par l'accumulateur d'énergie au moins par intermittence, l'agrégat (12) produisant une puissance théorique (Pelsoll) ;
ladite puissance théorique étant calculée à partir du besoin en puissance momentané d'un réseau de bord et par l'état de charge momentané de l'accumulateur d'énergie électrique ;
un moment d'entraînement théorique (Msoll) demandé de l'entraînement étant produit et la puissance théorique (Pelsoll) de l'agrégat (12) étant simultanément maintenue dans le temps, des écarts étant admis par rapport à la puissance théorique (Pelsoll) en fonction des points de fonctionnement actuels des agrégats (10, 12) ; et
une optimisation des points de fonctionnement des agrégats (10, 12) étant réalisée en fonction des conditions de bord actuelles et du moment d'entraînement théorique (Msoll) ;
**caractérisé en ce qu'**un écart ([Delta]E) intégré et ajouté sur un laps de temps passé de la puissance réelle (Pelist) par rapport à la puissance théorique (Pelsoll) de l'agrégat (12) est pris en compte lors de l'optimisation.

2. Procédé selon la revendication 1, **caractérisé en ce qu'**un prix d'énergie est utilisé en fonction du point de fonctionnement momentané de la chaîne d'entraînement ou de l'état de conduite momentané.

3. Procédé selon la revendication 2, **caractérisé en ce que** le prix de l'énergie est élaboré à partir de la quantité de carburant nécessaire à la production d'énergie électrique et de la quantité d'énergie électrique produite.

4. Procédé selon la revendication 2 ou 3, **caractérisé en ce que** l'optimisation des points de fonctionnement des agrégats (10, 12) est réalisée de façon à ce que plus d'énergie électrique soit produite par la machine électrique (12) aux points de fonctionnement présentant un prix d'énergie avantageux et que moins d'énergie soit produite lorsque le prix de l'énergie est moins avantageux.

5. Procédé selon l'une quelconque des revendications précédentes, **caractérisé en ce que** l'accumulateur d'énergie est davantage chargé lorsqu'une charge constate un optimum des points de fonctionnement des agrégats (10, 12).

6. Procédé selon l'une quelconque des revendications 1 à 5, **caractérisé en ce que** l'optimisation se produit pendant une durée de calcul des algorithmes d'un module de commande du véhicule.

7. Procédé selon l'une quelconque des revendications 1 à 5, **caractérisé en ce que** l'on utilise des résultats mémorisés pour différents jeux de conditions de bord faisant partie des caractéristiques d' un module de commande du véhicule pour l'optimisation.

8. Procédé selon la revendication 7, **caractérisé en ce que** les résultats mémorisés par le biais des caractéristiques sont modifiés sur la base de l'écart (ΔE) de puissance réelle (Pelist) intégré ou ajouté sur un laps de temps passé par rapport à la puissance théorique (Pelsoll) de l'agrégat (12).

9. Procédé selon l'une quelconque des revendications 1 à 5, **caractérisé en ce que** plusieurs jeux de caractéristiques sont mémorisés, lesdits jeux conduisant en moyenne à différentes puissances réelles (Pelist) de l'agrégat (12).

10. Procédé selon la revendication 9, **caractérisé en ce que** la sélection d'un jeu de caractéristiques est réalisé sur la base de l'écart (ΔE) de puissance réelle (Pelist) intégré ou ajouté sur un laps de temps passé par rapport à la puissance théorique (Pelsoll) de l'agrégat (12).

11. Procédé selon la revendication 9 ou 10, **caractérisé en ce qu'**une interpolation se produit entre le début des différents jeux de caractéristiques.

12. Procédé selon l'une quelconque des revendications 1 à 11, **caractérisé en ce que** l'écart (ΔE) de puissance réelle (Pelist) intégré ou ajouté sur un laps de temps passé est pondéré par rapport à la puissance théorique (Pelsoll) de l'agrégat (12) en prenant en compte un facteur de renforcement (k).

13. Procédé selon l'une quelconque des revendications 1 à 12, **caractérisé en ce que** l'écart (ΔE) de puissance réelle (Pelist) intégré ou ajouté sur un laps de temps passé est limité par rapport à la puissance théorique (Pelsoll) de l'agrégat (12) en fonction de l'état de fonctionnement de la chaîne d'entraînement.

14. Procédé selon l'une quelconque des revendications 1 à 13, **caractérisé en ce que** l'écart (ΔE) de puissance réelle (Pelist) intégré ou ajouté sur un laps de temps passé est réinitialisé par rapport à la puissance théorique (Pelsoll) de l'agrégat (12) lors d'un changement d'état de fonctionnement de la chaîne d'entraînement.
